Europäisches Patentamt

European Patent Office

Office européen des brevets

(19)

(11) EP 0 558 863 B1

(12) **FASCICULE DE BREVET EUROPEEN**

(45) Date de publication et mention
de la délivrance du brevet:
**06.03.1996 Bulletin 1996/10**

(51) Int Cl.6: **G01N 21/21**

(21) Numéro de dépôt: **92403572.8**

(22) Date de dépôt: **29.12.1992**

(54) **Ellipsomètre infrarouge**

Infrarot-Elliposmeter

Infrared ellipsometer

(84) Etats contractants désignés:
**CH DE GB LI**

(30) Priorité: **07.01.1992 FR 9200090**

(43) Date de publication de la demande:
**08.09.1993 Bulletin 1993/36**

(73) Titulaire: **CENTRE NATIONAL DE
LA RECHERCHE SCIENTIFIQUE
F-75007 Paris (FR)**

(72) Inventeurs:
- **Drevillon, Bernard
  F-92190 Meudon (FR)**
- **Canillas Biosca, Adolfo
  E-25006 Lleida (ES)**

(74) Mandataire: **Michelet, Alain et al
Cabinet Harlé et Phelip
21 rue de la Rochefoucauld
F-75009 Paris (FR)**

(56) Documents cités:
**FR-A- 2 602 338**

- **REVIEW OF SCIENTIFIC INSTRUMENTS. vol. 60, no. 1, Janvier 1989, NEW YORK US pages 65 - 77 O. ACHER ET AL. 'Improvements of phase-modulated ellipsometry'**
- **JOURNAL OF APPLIED PHYSICS. vol. 68, no. 11, 1 Décembre 1990, NEW YORK US pages 5810 - 5813 F. FERRIEU ET AL. 'Nondestructive characterization of silicon-on-insulator structures using infrared spectroscopic ellipsometry'**
- **REVIEW OF SCIENTIFIC INSTRUMENTS. vol. 53, no. 7, Juillet 1982, NEW YORK US, pages 969-977 B. DREVILLON ET AL. "Fast polarization modulated ellipsometer using a microprocessor system for digital Fourier analysis"**
- **THIN SOLID FILMS. vol. 163, no. 1, Septembre 1988, LAUSANNE CH pages 157 - 166 B. DREVILLON 'Spectroscopic ellipsometry of ultrathin films : from UV to IR'**
- **VIDE, LES COUCHES MINCES vol. 47, no. 258, Août 1991, PARIS FR pages 264 - 273 R. BENFERHAT 'Design of new in situ spectroscopic phase modulated ellipsometer'**

Printed by Jouve, 75001 PARIS (FR)

**Description**

L'invention concerne un ellipsomètre infrarouge à modulation de phase et à transformée de Fourier.

L'ellipsométrie permet la détermination de propriétés physiques d'un échantillon par une mesure optique. La surface d'un échantillon est éclairée par un faisceau lumineux, et l'état de polarisation du faisceau réfléchi ou transmis est comparé à celui du faisceau incident. Le vecteur-polarisation E est généralement représenté par ses projections $E_S$ et $E_P$, respectivement perpendiculaires et parallèles au plan d'incident ; $E_P$ et $E_S$ sont des amplitudes complexes.

Dans le domaine de l'ellipsométrie, on représente généralement le rapport $(E_P/E_S)^r / (E_P/E_S)^i$ significatif des modifications de l'état de polarisation produites par la surface étudiée, sous la forme :

$$tg\psi.\exp(i\Delta)=(Ep/Es)^r / (Ep/Es)^i$$

L'ellipsométrie a donc pour but la mesure des paramètres $\psi$ et $\Delta$ pour une surface donnée.

Il est ainsi possible, par exemple, d'étudier des mécanismes de croissance des couches minces et de formation des interfaces, ou encore de contrôler un procédé d'élaboration.

L'ellipsométrie est une méthode d'analyse non destructive et non perturbatrice. Ainsi, des mesures in situ peuvent être faites sur des échantillons dans les conditions réelles d'élaboration.

Selon le domaine de longueur d'onde de la source, proche ultraviolet, visible, proche infrarouge, infrarouge..., il est possible d'accéder à des propriétés différentes des matériaux ou d'explorer des matériaux différents.

Dans le domaine de l'ultraviolet et du visible, la profondeur de pénétration du rayonnement est souvent faible. Cela constitue des conditions favorables pour l'étude des surfaces et des interfaces, et pour les contrôles en temps réel comprenant des nettoyages. Cela ne permet généralement pas d'accéder aux propriétés volumiques des matériaux, qui peuvent au contraire être obtenues par des mesures dans le domaine de l'infrarouge.

L'infrarouge est bien adapté aux mesures d'absorption vibrationnelle (liaisons chimiques)....

Le domaine de longueur d'onde considéré influe de manière déterminante sur les dispositifs et instruments de mesure utilisés. En effet, certains composants ou certaines techniques, connus et utilisables dans un domaine de longueur d'onde, ne sont pas transposables ou ne donnent pas un degré de précision suffisant dans un autre domaine.

Dans le domaine infrarouge, c'est-à-dire approximativement pour des longueurs d'onde comprises entre 2 et 19 micromètres, on connaît différents ellipsomètres.

Le brevet allemand DD-1572 19 décrit un ellipsomètre à transformée de Fourier. Ce dispositif comporte un interféromètre de Michelson placé avant ou après l'échantillon. L'échantillon est placé entre un polariseur et un analyseur dont les orientations, au cours d'une mesure, sont fixes. Dans certains modes de réalisation, un troisième polariseur est placé entre la source et le polariseur d'entrée.

Le brevet français FR-2 602 338 décrit un ellipsomètre à modulation de phase comportant un monochromateur à réseaux.

Le but de la présente invention est la réalisation d'un ellipsomètre infrarouge qui permette d'obtenir une mesure de précision améliorée.

C'est un autre but de l'invention de proposer un ellipsomètre infrarouge, dont l'utilisation soit simple, et qui puisse être facilement automatisé.

Un autre but de l'invention est de cumuler dans le même dispositif les avantages de la modulation de phase et de la spectrométrie par transformée de Fourier.

A cet effet, l'invention concerne un ellipsomètre infrarouge destiné à la mesure d'un échantillon comportant :

- un groupe d'excitation,
- un support d'échantillon,
- un groupe d'analyse,
- des moyens électroniques commandant le groupe d'excitation, recevant des informations du groupe d'analyse et fournissant la mesure.

Le groupe d'excitation comporte une source, des moyens de polarisation et de modulation de la polarisation, un interféromètre de Michelson et des moyens optiques conjugant la source et l'échantillon.

Le groupe d'analyse comporte un polariseur-analyseur, un détecteur et des moyens optiques de conjugaison de l'échantillon et du détecteur.

Selon l'invention, les moyens de modulation de la polarisation sont un modulateur de phase, et les moyens électroniques contrôlent le modulateur de phase et l'interféromètre de Michelson, et reçoivent le signal produit par le détecteur.

Dans un mode de réalisation préféré, lesdits moyens électroniques comportent :

- un préamplificateur,

- un convertisseur analogique-numérique,
- un analyseur de Fourier,
- un registre,
- un micro-ordinateur,

le préamplificateur reçoit en entrée le signal électrique fourni par le photodétecteur et fournit un signal de sortie, le convertisseur analogique-numérique reçoit en entrée le signal de sortie du préamplificateur et fournit une numération, l'analyseur de Fourier reçoit en entrée la sortie du convertisseur, et reçoit un premier signal de référence provenant de l'interféromètre de Michelson, et un deuxième signal de référence provenant du modulateur de phase, et produit en sortie des valeurs représentatives du signal d'entrée, le registre reçoit les valeurs de sortie de l'analyseur de Fourier, et le micro-ordinateur stocke ces données et fournit, après traitement, la mesure.

L'invention concerne également un procédé de mesure ellipsométrique infrarouge des paramètres $\psi$ et $\Delta$ représentatifs d'un échantillon, dans lequel l'échantillon est éclairé par un faisceau lumineux incident polarisé produit par une source infrarouge, le flux lumineux est reçu et renvoyé par l'échantillon, analysé par un analyseur et mesuré par un photodétecteur.

Selon l'invention, le flux lumineux incident, après traversée d'un interféromètre de Michelson ayant un miroir mobile dont le déplacement est x, a une intensité :

$$I(x) = \int I(\vartheta, t) [(1 + \cos 2\pi x) / 2] d\vartheta$$

où $\vartheta$ est la fréquence du flux lumineux à un instant donné et t est le temps, $I(\vartheta, t)$ est modulé par le modulateur de phase 8 à la fréquence w. Il comporte :

- des premiers moyens de calcul à transformée de Fourier décomposant le signal $I(\vartheta, t)$ en trois composantes $S_0$, $S_1$, $S_2$, respectivement continue, à la fréquence w et à la fréquence 2w,
- des seconds moyens de calcul donnant accès aux dépendances spectrales $S_0(\vartheta)$, $S_1(\vartheta)$, $S_2(\vartheta)$ par transformée de Fourier spatiale inverse,
- des troisièmes moyens de calcul produisant des valeurs $I_0$, $I_s$, $I_c$ à partir des composantes $S_0$, $S_1$, $S_2$, selon les formules respectives :

$$S_0 = I_0 + I_c J_0(k\vartheta),$$

$$S_1 = 2T_1 J_1(k\vartheta) I_s$$

$$S_2 = 2 T_2 J_2(k\vartheta) I_c$$

où $J_0$, $J_1$, $J_2$ sont les fonctions de Bessel d'ordre 0, 1, 2 ; k est une constante ; $T_1$ et $T_2$ sont des constantes spécifiques de l'appareil,

- $T_1$, $T_2$ et k sont mesurés par calibration,
- des quatrièmes moyens de calcul produisant les valeurs $\psi$ et $\Delta$ selon des formules trigonométriques à partir de $I_o$, $I_s$ et $I_c$.

$$I_o = 1 - \cos 2\psi \cos 2\Delta + \cos 2(P-M)\cos 2M(\cos 2\Delta - \cos 2\psi) + \sin 2\Delta \cos \Delta \cos 2(P-M)\sin 2\psi \sin 2M$$

$$I_S = \sin 2(P-M)\sin 2\Delta \sin 2\psi \sin \Delta$$

$$I_C = \sin 2(P-M)\{\sin 2M(\cos 2\psi - \cos 2\Delta\} + \sin 2\Delta \cos 2M \sin 2\psi \cos \Delta\}$$

P, M, A étant les orientations respectives du polariseur, du modulateur et de l'analyseur par rapport au plan d'incidence.

Dans un mode de réalisation préféré, la fréquence du modulateur est comprise entre 30 et 60 kHz, l'interféromètre de Michelson effectue un balayage dans une durée comprise entre 0,5 et 4 secondes, et le laser de référence fournit des impulsions à une fréquence de l'ordre de 2 kHz.

Un mode de réalisation de l'invention sera décrit en détail, en référence aux dessins annexés, dans lesquels :

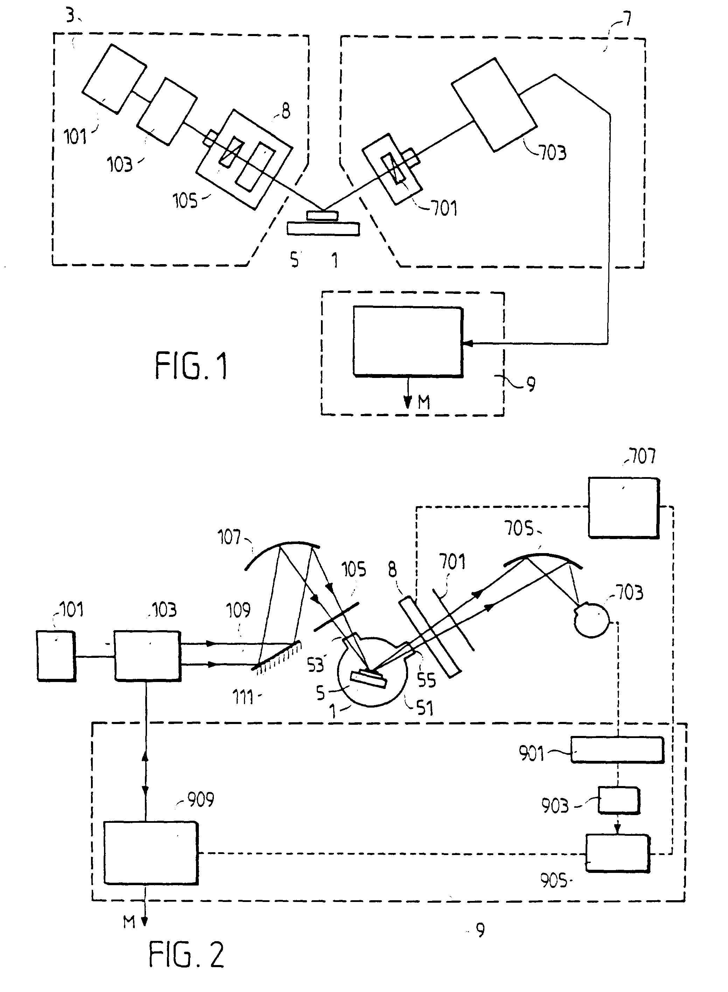

- la Figure 1 est une représentation schématique d'un ellipsomètre selon l'invention,
- la Figure 2 est une représentation schématique plus détaillée de l'ellipsomètre de la Figure 1,

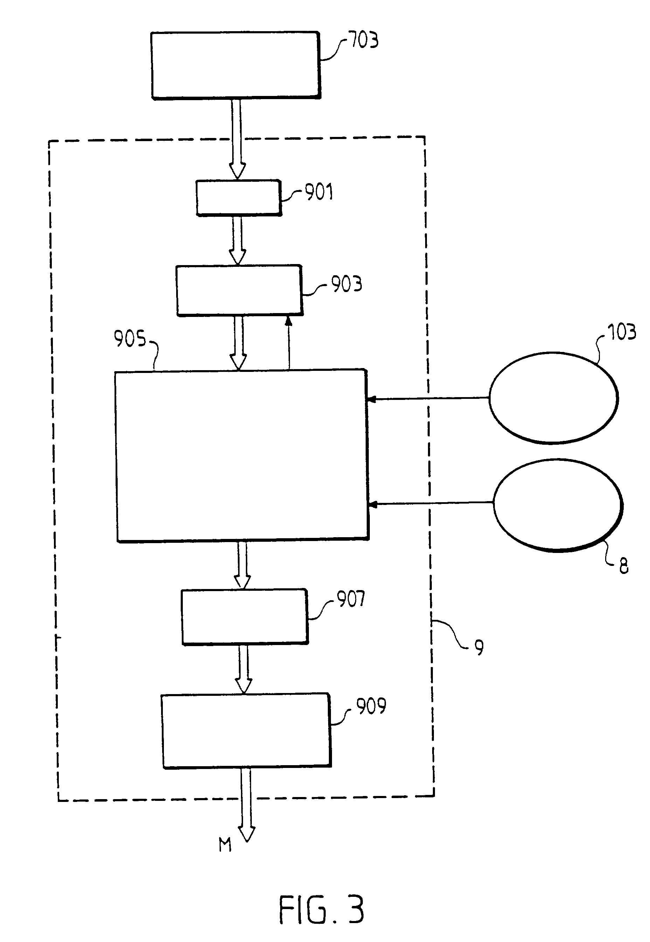

- la Figure 3 est un organigramme du traitement du signal selon l'invention,
- les Figures 4 et 5 sont des représentations schématiques des signaux fournis par l'interféromètre de Michelson,
- la Figure 6 est une représentation schématique de l'acquisition des données.

L'ellipsomètre infrarouge est destiné à la mesure d'un échantillon 1. Il comporte un groupe d'excitation 3, un support d'échantillon 5, un groupe d'analyse 7, et des moyens électroniques 9.

Cet ellipsomètre est un ellipsomètre infrarouge travaillant dans une gamme de longueur d'onde s'étendant d'environ 2 micromètres jusqu'à 11 micromètres environ. Le groupe d'excitation 3 comporte une source 101 de type Globar, un interféromètre de Michelson 103, un polariseur 105 et un moyen optique 107 assurant la conjugaison de la source 101 avec l'échantillon 1.

Dans un mode de réalisation particulièrement avantageux, l'interféromètre de Michelson 103 produit un faisceau de sortie parallèle 109 de section circulaire de diamètre de 38 mm environ. Le moyen optique de conjugaison 107 représenté schématiquement par un seul miroir comprend un miroir parabolique et deux miroirs sphériques. Le miroir plan 111 permet de replier le faisceau et par là, de diminuer l'encombrement du dispositif. Ainsi, le faisceau est focalisé sur un échantillon de 1 cm$^2$ de surface environ.

L'échantillon 1 placé sur le support d'échantillon 5 peut être à l'intérieur d'un réacteur ou d'une enceinte à vide 51. Il est ainsi possible de réaliser des mesures in situ, à condition que l'enceinte à vide soit munie de hublots 53 et 55, transparents dans le domaine spectral de fonctionnement de l'ellipsomètre et ne modifiant pas l'état de polarisation de la lumière transmise.

Le groupe d'analyse 7 comporte un polariseur-analyseur 701, un détecteur 703 et des moyens optiques 705 conjugant la surface de l'échantillon 1 avec le photodétecteur 703.

Dans un mode de réalisation préféré, les moyens optiques de conjugaison 705 sont composés d'un miroir sphérique et d'un miroir parabolique. La surface de l'échantillon 1 excité (1 cm$^2$) est conjuguée avec la surface sensible du détecteur 703 qui mesure environ 1 mm$^2$.

Le détecteur 703 est de préférence un détecteur Hg.Cd.Te. de type photovoltaïque refroidi à l'azote liquide. Ses performances sont à l'origine de la limite supérieure de domaine de longueur d'onde, dans lequel l'ellipsomètre est utilisable. Une limite de 19 micromètres est possible.

L'ellipsomètre comporte un modulateur de phase 8, de préférence photoélastique, en Zn.Se., assurant la modulation de flux lumineux transmis à une fréquence w.

Le modulateur de phase 8 est de préférence dans le groupe d'excitation 3. Toutefois, il peut également être dans le groupe de réception, sans que cela modifie très notablement la forme du signal optique reçu par le photodétecteur 703.

Les moyens électroniques 9 reçoivent, en plus du signal électrique fourni par le photodétecteur 703, une première référence correspondant au modulateur dite référence haute fréquence, et différents signaux provenant de l'interféromètre de Michelson 103.

Ces signaux de fréquence inférieure à la fréquence du modulateur indiquent les instants de début et de fin de balayage du spectre, le sens de ce balayage comporte un signal de référence basse fréquence fourni par le laser de référence de l'interféromètre de Michelson 103.

Le signal électrique fourni par le détecteur 703 est préamplifié par le préamplificateur 901, puis converti en un signal numérique par le convertisseur analogique-numérique 903.

Une partie du signal fourni par le convertisseur analogique-numérique de 16 bits 903 est exploitée par l'analyseur de Fourier numérique 905, de manière à en extraire la composante continue, la composante à la fréquence w et la composante à la fréquence 2w. A cet effet, le composant 707 lui adresse une référence à la fréquence w.

L'analyseur de Fourier transmet son résultat à un registre 907 qui est de préférence du type "First in, First out - FIFO". Le micro-ordinateur 909 exploite le registre 907 de manière à fournir, après calcul, les valeurs mesurées $\psi$ et $\Delta$.

Afin d'extraire les composantes du signal constantes, à la fréquence w et à la fréquence 2w, l'analyseur de Fourier 905 reçoit d'une part le signal de référence haute fréquence à la fréquence w, et d'autre part les signaux de référence basse fréquence provenant de l'interféromètre de Michelson 103.

Le flux lumineux incident 109, après traversée d'un interféromètre de Michelson 103 ayant un miroir mobile dont le déplacement est x, a une intensité :

$$I(x) = \int I(\vartheta,t) \, [(1 + \cos 2\pi x) / 2] \, d\vartheta$$

où $\vartheta$ est la fréquence du flux lumineux à un instant donné, et t est le temps.

Le flux lumineux reçu par le détecteur 703, après passage sur l'échantillon 1, est modulé à la fréquence w par le modulateur de phase 8.

Le signal électrique fourni en réponse par le photodétecteur 703 a la même forme et après décomposition de Fourier, il peut être exprimé, par approximation :

$$I(\vartheta, t) = S_o + S'_1 + S'_2$$

dans lequel

$$S_o = I_o + I_c \, J_o(k\vartheta),$$
$$S'_1 = 2T_1 \, J_1(k\vartheta) \, I_s \sin w \, t = S_1 \sin w \, t$$
$$S'_2 = 2 \, T_2 \, J_2(k\vartheta) \, I_c \cos 2w \, t = S_2 \cos 2 \, w \, t$$

où $J_o$, $J_1$, $J_2$ sont les fonctions de Bessel d'ordre 0, 1, 2 ; k est une constante ; $T_1$ et $T_2$ sont des constantes spécifiques de l'ellipsomètre.

L'analyseur de Fourier 905, fourni à partir du signal I ($\vartheta$, t) fourni par le photodétecteur 703 les composantes $S_o$, $S_1$ et $S_2$.

Une calibration de l'ellipsomètre est réalisée en positionnant le polariseur, le modulateur de phase et l'analyseur dans des directions particulières.

P, M, A étant les angles d'orientation respectifs de ces trois éléments par rapport au plan d'incidence, la calibration est réalisée dans les deux configurations, pour lesquelles P - M = ± 45°, A = 0°, M = ± 45°.

Cette calibration, dans des conditions où $S_o$, $S_1$ et $S_2$ sont indépendants de l'échantillon, permet la mesure des paramètres $T_2$ et k, à l'aide d'un ajustement par la méthode des moindres carrés de la dépendance à fréquence ($\vartheta$) de $S_2/S_o$.

Des mesures effectuées dans des conditions d'orientation différentes de celles énoncées plus haut du polariseur, du modulateur et de l'analyseur fournissent de nouvelles valeurs $S_o$, $S_1$, $S_2$, d'où il peut être calculé, par inversion, les valeurs de $I_o$, $I_s$ et $I_c$. $T_1$ est déterminé de cette manière. Or, il est en soi connu que $I_o$, $I_s$ et $I_c$ sont reliés aux valeurs $\psi$ et $\Delta$ de la mesure par des formules trigonométriques simples.

Plus précisément, il est connu que

$$I_o = 1-\cos2\psi\cos2\Delta + \cos2(P-M)\cos2M(\cos2\Delta-\cos2\psi) + \sin2\Delta\cos\Delta\cos2(P-M)\sin2\psi\sin2M$$

$$I_S = \sin2(P-M)\sin2\Delta\sin2\psi\sin\Delta$$

$$I_C = \sin2(P-M)\{\sin2M(\cos2\psi-\cos2\Delta) + \sin2\Delta\cos2M\sin2\psi\cos\Delta\}$$

Ainsi, le calculateur 909 fournit, à partir du résultat de l'analyse de Fourier effectuée par l'analyseur 905, les valeurs des paramètres mesurés $\psi$ et $\Delta$ à par transformée de Fourier spatiale inverse.

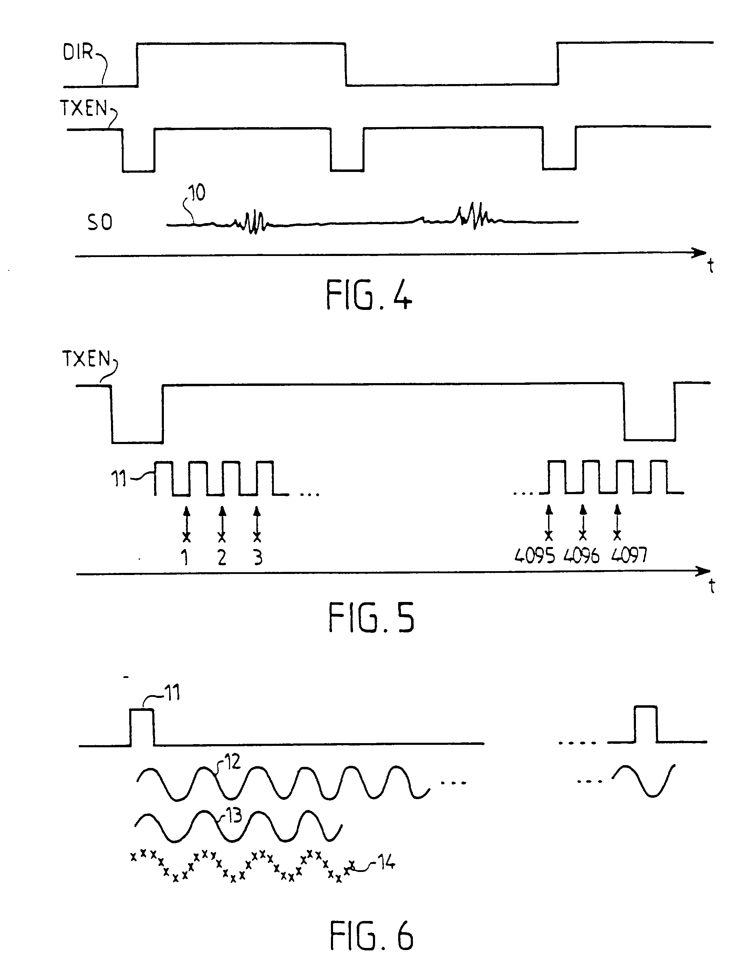

On a représenté sur la Figure 4 l'interférogramme $S_o$ 10, le signal est TXEN indiquant la fin et le début du balayage de l'interférogramme 10 par l'interféromètre de Michelson 103, et le signal DIR indiquant le sens de balayage de cet interférogramme.

Le signal 11 est produit par le laser de référence de l'interféromètre de Michelson 103, et fournit des créneaux régulièrement répartis en fonction de la différence de marche introduire par l'interféromètre de Michelson.

De préférence, ce signal de référence est à la fréquence de 2,116 kHz, ce qui correspond à une vitesse de balayage du miroir de l'interféromètre de 0,66 mm/s.

Le signal haute fréquence ayant une fréquence w comprise entre 30 et 60 kHz, par exemple égale à 37 kHz, de telle sorte qu'un nombre de périodes compris entre 10 et 100 intervient entre deux signaux de référence 11 du laser.

L'acquisition des données par le convertisseur 903 est contrôlée par l'analyseur de Fourier numérique 905. Chaque fois qu'il reçoit le signal de référence 11 du laser, il déclenche l'acquisition de l'un des points de l'interférogramme.

Chaque point est obtenu par l'intégration de quatre périodes du signal haute fréquence 12 (à 37 kHz).

Pour chaque période de ce signal haute fréquence, huit conversions du convertisseur analogique digital 903 sont prises en considération par l'analyseur de Fourier 905. On suppose que, pendant les quatre périodes successives 13 d'intégration, la variation de chemins optiques produite dans l'interféromètre de Michelson 103 est négligeable.

Après avoir acquis trente-deux points consécutifs 14, l'analyseur de Fourier fournit les composantes $S_o$, $S_1$ et $S_2$ au registre 907.

L'ordinateur 909 fournit, à partir de ces valeurs, les angles ellipsométriques $\psi$ et $\Delta$ par transformée de Fourier spatiale inverse.

Au cours de l'acquisition des trente-deux points consécutifs, il faut tenir compte de ce que les signaux de référence, provenant respectivement du modulateur de phase 8 et de l'interféromètre de Michelson 103, sont asynchrones. On fait une synchronisation en réalisant en continu des conversions analogiques digitales. Seules les valeurs numériques produites après l'arrivée de l'impulsion du laser de référence sont validées et acquises. A chaque point stocké, est affecté un numéro d'ordre qui permet d'effectuer l'acquisition des points en phase avec la modulation haute fréquence (w).

**Revendications**

1. Ellipsomètre infrarouge destiné à la mesure d'un échantillon (1) comportant :

   - un groupe d'excitation (3),
   - un support d'échantillon (5),

- un groupe d'analyse (7),
- des moyens électroniques (9) commandant le groupe d'excitation (3), recevant des signaux du groupe d'analyse (7) et fournissant la mesure,

le groupe d'excitation (3) comportant une source (101), un interféromètre de Michelson (103), un polariseur (105), des moyens optiques (107) conjugant la source (101) et l'échantillon (1),
le groupe d'analyse (7) comportant un polariseur-analyseur (701), un détecteur (703), des moyens optiques (705) de conjugaison de l'échantillon (1) et du détecteur (703),
caractérisé en ce qu il comporte un modulateur de phase (8), et que les moyens électroniques (9) contrôlent le modulateur (8) et l'interféromètre de Michelson (103), et reçoivent le signal produit par le détecteur (703).

2. Ellipsomètre infrarouge selon la revendication 1, caractérisé en ce que les moyens électroniques (9) comportent :

- un préamplificateur (901),
- un convertisseur analogique-numérique (903),
- un analyseur de Fourier (905),
- un registre (907),
- un micro-ordinateur (909),

le préamplificateur (901) recevant en entrée le signal électrique fourni par le photodétecteur (703) et fournissant un signal de sortie,
le convertisseur analogique-numérique (903) recevant en entrée le signal de sortie du préamplificateur (901) et fournissant un signal de sortie,
l'analyseur de Fourier numérique (905) recevant en entrée le signal de sortie du convertisseur (903), et recevant un premier signal de référence provenant de l'interféromètre de Michelson (103) et un deuxième signal de référence provenant du modulateur de phase (8), et produisant en sortie les valeurs représentatives du signal d'entrée,
le registre (907) recevant les valeurs de sortie de l'analyseur de Fourier (905),
le micro-ordinateur stockant ces données et fournissant les valeurs des angles ellipsométriques de la mesure par transformée de Fourier spatiale inverse.

3. Ellipsomètre infrarouge selon la revendication 2, caractérisé en ce que l'interféromètre de Michelson (103) comporte un laser de référence, et qu'il fournit un signal (TXEN) de début et de fin de balayage, un signal (DIR) de sens de balayage et un signal de référence (11) comportant un nombre N d'impulsions équidistantes par balayage ; que l'analyseur de Fourier (905) exploite les valeurs fournies par le convertisseur analogique digital (903) correspondant à quatre périodes successives de fonctionnement du modulateur de phase (8) suivant chaque impulsion du signal de référence (11).

4. Ellipsomètre infrarouge selon la revendication 3, caractérisé en ce que pour chaque période de fonctionnement du modulateur de phase (8), le convertisseur analogique-numérique (903) fournit huit valeurs du signal à l'analyseur de Fourier (905).

5. Ellipsomètre infrarouge selon l'une quelconque des revendications 2 à 4, caractérisé en ce que à chaque impulsion du signal de référence 11, l'analyseur de Fourier (905) fournit au registre (907) les coefficients $S_0$, $S_1$, $S_2$ du signal.

6. Ellipsomètre infrarouge selon l'une quelconque des revendications 1 à 5, caractérisé en ce que le registre (907) est un registre "First in First out - FIFO".

7. Procédé de mesure ellipsométrique infragrouge des paramètres et représentatifs d'un échantillon (1), dans lesquels l'échantillon (1) est éclairé par un faisceau lumineux incident de lumière polarisée (109) produit par une source infrarouge (101), le flux lumineux (109) est renvoyé par l'échantillon (1), analysé par un analyseur (701) et mesuré par un photodétecteur (703),
caractérisé en ce que :

- le flux lumineux, après traversée d'un interféromètre de Michelson (103) ayant un miroir mobile dont le déplacement est x, a une intensité :

$$I(x) = \int I(\vartheta,t) [(1 + \cos 2\pi x) / 2] d\vartheta$$

où $\vartheta$ est la fréquence du flux lumineux à un instant donné et t est le temps, $I(\vartheta,t)$ étant modulé à la fréquence w par un modulateur de phase (8),

- des premiers moyens de calcul à transformée de Fourier décomposent le signal I ($\vartheta$, t) en trois composantes $S_0$, $S_1$, $S_2$, respectivement continues, à la fréquence w et à la fréquence 2w,
- des seconds moyens de calcul donnant accès aux dépendances spectrales $S_0$ ($\vartheta$), $S_1$ ($\vartheta$), $S_2$ ($\vartheta$) par transformée de Fourier spatiale inverse,
- des troisièmes moyens de calcul produisent des valeurs $I_0$, $I_S$, $I_C$ à partir des composantes $S_0$, $S_1$, $S_2$, selon les formules respectives :

$$S_0 = I_o + I_c \, J_o \, (k\vartheta),$$

$$S_1 = 2T_1 \, J_1 \, (k\vartheta) \, I_s$$

$$S_2 = 2 \, T_2 \, J_2 \, (k\vartheta) \, I_c$$

où $J_0$, $J_1$, $J_2$ sont les fonctions de Bessel d'ordre 0, 1, 2 ; k est une constante ; $T_1$ et $T_2$ sont des constantes spécifiques de l'ellipsomètre,
- $T_1$, $T_2$ et k sont mesurés par calibration,
- des quatrièmes moyens de calcul produisent les valeurs $\psi$ et $\Delta$ selon des formules trigonométriques simples à partir de $I_0$, $I_s$ et $I_c$.

8.  Procédé de mesure ellipsométrique infrarouge selon la revendication 7, caractérisé en ce que le flux lumineux émis par la source a un spectre compris entre 1 et 19 micromètres.

9.  Procédé de mesure ellipsométrique infrarouge selon l'une des revendications 7 et 8, caractérisé en ce que les orientations du polariseur, du modulateur et de l'analyseur sont respectivement P, M, A, et que la calibration est réalisée selon les configurations P - M = ± 45°, A = 0°, M = ± 45° par ajustement par la méthode des moindres carrés de la dépendance spectrale ($\vartheta$) de $S_2/S_0$.

10. Procédé de mesure selon l'une quelconque des revendications 7 à 9, caractérisé en ce que la fréquence du modulateur (8) est comprise entre 30 et 60 kHz.

11. Procédé de mesure selon l'une quelconque des revendications 7 à 10, caractérisé en ce que l'interféromètre de Michelson effectue un balayage dans une durée comprise entre 0,5 et 4 secondes.

## Patentansprüche

1.  Infrarot-Ellipsometer zum Messen einer Probe (1), mit:

    - einem Erregersatz (3),

    - einem Probenträger (5),

    - einem Analysesatz (7),

    - einer elektronischen Einrichtung (9), die den Erregersatz (3) steuert, Signale vom Analysesatz (7) empfängt und die Messergebnisse liefert,

    - wobei der Erregersatz (3) eine Quelle (101), ein Michelson-Interferometer (103), einen Polarisator (105) und eine optische Einrichtung (107) aufweist, die die Quelle (101) und die Probe (1) verbindet,

    - wobei der Analysesatz (7) einen Polarisator/Analysator (701), einen Detektor (703) und eine optische Einrichtung (705) zum Verbinden der Probe (1) und des Detektors (703) aufweist,

    dadurch gekennzeichnet, daß es einen Phasenmodulator (8) aufweist, und daß die elektronische Einrichtung (9) den Modulator (8) und das Michelson-Interferometer (103) steuert und das von dem Detektor (703) erzeugte Signal empfängt.

2.  Infrarot-Ellipsometer nach Anspruch 1, dadurch gekennzeichnet, daß die elektronische Einrichtung (9) aufweist:

- einen Vorverstärker (901),

- einen Analog/Digital-Wandler (903),

- einen Fourier-Analysator (905),

- ein Register (907),

- einen Mikrocomputer (909),

wobei der Vorverstärker (901) als Eingang das von dem Photodetektor (703) gelieferte elektrische Signal empfängt und ein Ausgangssignal ausgibt,

wobei der Analog/Digital-Wandler (903) als Eingang das Ausgangssignal des Vorver-stärkers (901) empfängt und ein Ausgangssignal ausgibt,

wobei der digitale Fourier-Analysator (905) als Eingang das Ausgangssignal des Wandlers (903) empfängt und ein von dem Michelson-Interferometer (103) kommendes erstes Referenzsignal und ein vom Phasenmodulator (8) kommendes zweites Referenzsignal empfängt und als Ausgang die das Eingangssignal repräsentierenden Werte erzeugt,

wobei das Register (907) die Ausgangswerte des Fourier-Analysators (905) empfängt,

wobei der Mikrocomputer diese Daten speichert und die Meßwerte der ellipsometrischen Winkel durch inverse räumliche Fourier-Transformation liefert.

3. Infrarot-Ellipsometer nach Anspruch 1, dadurch gekennzeichnet, daß das Michelson-Interferometer (103) einen Referenz-Laser aufweist und daß es pro Abtastung ein Abtastanfangs- und Abtastendsignal (TXEN), ein Abtastrichtungssignal (DIR) und ein Referenzsignal (11) mit einer Anzahl N von äquidistanten Impulsen ausgibt, daß der Fourier-Analysator (905) die von dem Analog/Digital-Wandler (903) entsprechend vier aufeinanderfolgenden Betriebsperioden des Phasenmodulators (8) nach jedem Impuls des Referenzsignals (11) gelieferten Werte auswertet.

4. Infrarot-Ellipsometer nach Anspruch 3, dadurch gekennzeichnet, daß der Analog/Digital-Wandler (903) für jede Betriebsperiode des Phasenmodulators (8) acht Signalwerte an den Fourier-Analysator (905) liefert.

5. Infrarot-Ellipsometer nach einem der Ansprüche 2 bis 4, dadurch gekennzeichnet, daß der Fourier-Analysator (905) bei jedem Impuls des Referenzsignals (11) die Koeffizienten $S_o$, $S_1$ und $S_2$ des Signals an das Register (907) liefert.

6. Infrarot-Ellipsometer nach einem der Ansprüche 1 bis 5, dadurch gekennzeichnet, daß das Register (907) ein "First-in-First-out - FIFO"-Register ist.

7. Verfahren zum ellipsometrischen infraroten Messen der Parameter und Merkmale einer Probe (1), wobei die Probe (1) mit einem von einer Infrarot-Quelle (101) erzeugten einfallenden Lichtstrahl polarisierten Lichts (109) beleuchtet wird, der Lichtfluß (109) von der Probe (1) zurückgeworfen, von einem Analysator (701) analysiert und von einem Photodetektor (703) gemessen wird,
dadurch gekennzeichnet, daß

- der Lichtfluß nach dem Durchlaufen eines Michelson-Interferometers (103) mit einem bewegbaren Spiegel, dessen Verschiebung x ist, die folgende Intensität aufweist:

$$I(x) = \int I(\nu,t) [(1 + \cos 2\pi x)/2] \, d\nu$$

wobei $\nu$ die Frequenz des Lichtflusses zu einem gegebenen Zeitpunkt und t die Zeit angibt, und wobei $I(\nu, t)$ mit der Frequenz w durch einen Phasenmodulator (8) moduliert ist,

- eine erste Fourier-Transformationsrecheneinrichtung das Signal $I(\nu, t)$ in drei jeweils kontinuierliche Komponenten $S_o$, $S_1$ und $S_2$ mit der Frequenz w und mit der Frequenz 2w zerlegt,

- eine zweite Recheneinrichtung, die Zugriff auf die Spektralabhängigkeiten $S_o(\nu)$, $S_1(\nu)$ und $S_2(\nu)$ durch inverse

räumliche Fourier-Transformation bietet,

- eine dritte Recheneinrichtung die Werte $I_o$, $I_s$ und $I_c$ aus den Komponenten $S_o$, $S_1$ und $S_2$ nach den jeweiligen Formeln berechnet:

$$S_o = I_o + I_c \, J_o \, (k\nu)$$

$$S_1 = 2T_1 \, J_1 \, (k\nu) \, I_s$$

$$S_2 = 2T_2 \, J_2 \, (k\nu) \, I_c$$

wobei $J_o$, $J_1$ und $J_2$ Bessel-Funktionen der Ordnung 0, 1 und 2 sind, k eine Konstante und $T_1$ und $T_2$ spezifische Konstanten des Ellipsometers sind,

- $T_1$, $T_2$ und k durch Kalibrierung gemessen werden,

- eine vierte Recheneinrichtung die Werte $\psi$ und $\Delta$ aus $I_o$, $I_s$ und $I_c$ nach einfachen trigonomischen Formeln erzeugt.

8. Verfahren zum ellipsometrischen infraroten Messen nach Anspruch 7, dadurch gekennzeichnet, daß der von der Quelle emittierte Lichtfluß ein Spektrum zwischen 1 und 19 Mikrometer aufweist.

9. Verfahren zum ellipsometrischen infraroten Messen nach einem der Ansprüche 7 und 8, dadurch gekennzeichnet, daß die Ausrichtungen des Polarisators, des Modulators und des Analysators P, M bzw. A sind, und daß die Kalibrierung nach den Konfigurationen P - M = ±45°, A = 0°, M = ±45° durch Einstellen mittels dem Verfahren der kleinsten Fehlerquadrate der spektralen Abhängigkeit ($\nu$) von $S_2/S_o$ erfolgt.

10. Meßverfahren nach einem der Ansprüche 7 bis 9, dadurch gekennzeichnet, daß die Frequenz des Modulators (8) zwischen 30 und 60 kHz liegt.

11. Meßverfahren nach einem der Ansprüche 7 bis 10, dadurch gekennzeichnet, daß das Michelson-Interferometer eine Abtastung innerhalb eines Zeitraums zwischen 0,5 und 4 Sekunden durchführt.

**Claims**

1. Infrared ellipsometer for measuring a sample (1), comprising:

   - an exciter group (3),
   - a sample support (5),
   - an analysis group (7),
   - electronic means (9) for controlling said exciter group (3), receiving signals from said analysis group (7) and supplying a measurement result,

     said exciter group (3) comprising a source (101), a Michelson interferometer (103), a polarizer (105), and optical means (107) for aligning said source (101) and said sample (1),
     said analysis group (7) comprising a polarizeranalyzer (701), a detector (703) and optical means (705) for aligning said sample (1) and said detector (703),
     characterized in that it comprises a phase modulator (8), and that the electronic means (9) control said modulator (8) and said Michelson interferometer (103), and receive said signal produced by said detector (703).

2. Infrared ellipsometer according to claim 1, characterized in that said electronic means (9) comprise:

   - a pre-amplifier (901),
   - an analog-to-digital converter (903),
   - a Fourier analyzer (905),
   - a register (907),
   - a microcomputer (909),

said pre-amplifier (901) receiving at its input the electric signal provided by said photodetector (703) and providing an output signal,

said analog-to-digital converter (903) receiving at its input the output signal from said pre-amplifier (901) and providing an output signal,

said digital Fourier analyser (905) receiving at its input the output signal from said converter (903), and receiving a first reference signal originating from said Michelson interferometer (103) and a second reference signal originating from said phase modulator (8), and producing at its output values which are representative data of the input signal,

said register (907) receiving the output values from said Fourier analyser (905),

said microcomputer storing these data and providing values of the ellipsometric angles of the measurement by inverse spatial Fourier transform.

3. Infrared ellipsometer according to claim 2, characterized in that said Michelson interferometer (103) comprises a reference laser, and that it provides a start and end scanning signal (TXEN), a scanning direction signal (DIR) and a reference signal (11) comprising a number N of equidistant pulses per scan; that said Fourier analyzer (905) uses the values provided by said analog-to-digital converter (903) corresponding to four successive working periods of said phase modulator (8) following each pulse of the reference signal (11).

4. Infrared ellipsometer according to claim 3, characterized in that for each working period of said phase modulator (8), said analog-to-digital converter (903) provides said Fourier analyzer (905) with eight values of the signal.

5. Infrared ellipsometer according to any one of claims 2 to 4, characterized in that on each pulse of the reference signal (11), said Fourier analyzer (905) provides said register (907) with the coefficients $S_o$, $S_1$ and $S_2$ of the signal.

6. Infrared ellipsometer according to any one of claims 1 to 5, characterized in that said register (907) is a "First in First out" FIFO register.

7. A method of infrared ellipsometric measuring of the representative parameters of a sample (1) in which the sample (1) is illuminated by a polarized incident light beam (109) produced by an infrared source (101), the luminous flux (109) being reflected by the sample (1), analyzed by an analyzer (701) and then measured by a photodetector (703), characterized in that:

- the intensity of the incident luminous flux having passed through a Michelson interferometer (103) comprising a moving mirror whose displacement is x, is:

$$I \ (x) = \int I \ ( \ \nu, \ t) \ [(1 + \cos 2 \ \pi \ x) \ / \ 2] \ d \ \nu$$

where $\nu$ is the frequency of the luminous flux at a given moment and t is the time, $I \ (\nu, \ t)$ being modulated by the phase modulator (8) at frequency w,

- first Fourier-transform processing means break down the signal $I \ (\nu, \ t)$ into three separate dc components, $S_0$, $S_1$, $S_2$, at frequency w and at frequency 2w,
- second processing means give access to the spectral dependencies $S_O \ (\nu)$, $S_1 \ (\nu)$, $S_2 \ (\nu)$ through inverse spatial Fourier transform,
- third processing means produce values $I_o$, $I_s$, $I_c$ from components $S_0$, $S_1$, $S_2$, according to the following formulae, respectively:

$$S_o = I_o + I_c \ J_o \ (k\nu),$$

$$S_1 = 2T_1 \ J_1 \ (k\nu) \ I_s$$

$$S_2 = 2T_2 \ J_2 \ (k\nu) \ I_c$$

where $J_0$, $J_1$ and $J_2$ are the Bessel functions of order 0, 1, 2; k is a constant; $T_1$ and $T_2$ are specific constants of the ellipsometer,
- $T_1$, $T_2$ and k are measured by calibration,
- fourth processing means produce the values $\psi$ and $\Delta$ from $I_o$, $I_s$ and $I_c$ according to simple trigonometric formulae.

8. The method of infrared ellipsometric measuring according to claim 7, characterized in that the wavelength of the luminous flux emitted by said source is between 1 and 19 micrometers.

9. The method of infrared ellipsometric measuring according to one of claims 7 and 8, characterized in that the orientations of said polarizer, modulator and analyzer are respectively P, M, A and that calibration is performed according to configurations P - M = ± 45°, A = 0°, M = ± 45° by adjustment using the least squares method of the spectral dependency ($v$) of $S_2/S_0$.

10. The method of measuring according to any one of claims 7 to 9, characterized in that the frequency of said modulator (8) is between 30 and 60 kHz.

11. The method of measuring according to any one of claims 7 to 10, characterized in that the scanning time of said Michelson interferometer is any value from 0.5 to 4 seconds.

FIG. 1

FIG. 2

FIG. 3

FIG. 4

FIG. 5

FIG. 6